# EUROPEAN PATENT SPECIFICATION

(11) **EP 4 253 159 B1**
(45) Date of publication and mention of the grant of the patent: **27.08.2025**
(21) Application number: 21897575.3
(22) Date of filing: 22.10.2021
(51) Int. Cl.: B60R 16/02, G06F 8/65

(54) **INFORMATION UPDATE SYSTEM**
INFORMATIONSAKTUALISIERUNGSSYSTEM
SYSTÈME DE MISE À JOUR D'INFORMATIONS

(30) Priority: 27.11.2020 JP 2020197607
(43) Date of publication of application: 04.10.2023
(73) Proprietor: Kubota Corporation, Osaka 556-8601 (JP)
(72) Inventor: FUJII, Yasuo, Sakai-shi Osaka 592-8331 (JP); IMAHARA, Hiroaki, Sakai-shi Osaka 592-8331 (JP); NISHIOKA, Kenji, Sakai-shi Osaka 592-8331 (JP)
(74) Representative: Mewburn Ellis LLP
(86) International application number: PCT/JP2021/039181
(87) International publication number: WO 2022/113597

(56) References cited:
- JP-A- 2005 132 131
- JP-A- 2019 036 251
- JP-A- 2020 062 909
- JP-A- H11 141 395
- US-A1- 2018 107 473

## Description

### [Technical Field]

The present invention relates to an information update system which updates information stored in a control unit mounted on an industrial machine.

### [Background Art]

PTL 1 discloses a rewriting system which rewrites information stored in a control unit to be rewritten from among a plurality of control units provided in a vehicle. As the system described in PTL 1, for example, a system has been proposed in which software for rewriting information stored in the control unit is downloaded by wireless distribution and the information stored in the control unit provided in a vehicle is updated by using the downloaded software. According to the system as above, a user can update the information stored in the control unit without bringing the vehicle into a dealer or a service center. As a result, convenience for the user of the vehicle is improved, and loads on the dealer and the service center can be reduced.

Here, when the information stored in the control unit mounted on the vehicle is to be updated, in order to reliably complete the update of the information while safety is ensured, such a state is required that an engine of the vehicle is stopped, and electricity is supplied to the control unit. Therefore, as the system described in PTL 1, for example, in the system which updates the information stored in the control unit mounted on the vehicle such as an automobile, after ignition of the vehicle is turned off, an execution control unit, which executes update of the information, is set to a state called a standby mode or a sleep mode in which an operation is performed with a low power consumption. And when the control unit, which is a target of the information update, is brought into a state capable of update, the execution control unit transfers from the state called the standby mode or the sleep mode to a state called an operation mode or a normal mode in which the operation is performed with normal power consumption, and performs the information update. The "ignition" here refers to a component which sets a conduction state of the electricity supplied to the vehicle from a battery mounted on the vehicle to on or off.

However, industrial machines such as a construction machine, an agricultural machine, a lawnmower and the like, for example, are left in a state, where an engine is stopped for a long time such as several weeks or several months, as compared with the automobiles in some cases. Therefore, there is a concern that a battery is exhausted even in a case set to a state called the standby mode or the sleep mode, in which at least either one of the control unit which performs information update and the control unit as the target of information update is operated with low power consumption. And there is a concern that the engine cannot be started when the user is to use the industrial machine.

### [Citation List]

### [Patent Literature]

[PTL 1] Japanese Patent Application Publication No. 2010-167997
[PTL 2] US 2018/107473 Al proposes a software update system for a vehicle

### [Summary of Invention]

### [Technical Problem]

The present invention has been made in order to solve the aforementioned problem and has an object to provide an information update system which can update information stored in a control unit mounted on an industrial machine by using an update file transmitted wirelessly while occurrence of battery exhaustion is suppressed.

### [Solution to Problem]

The aforementioned problem is solved by an information update system according to the present invention as set out in claim 1.

According to the information update system according to the present invention, the first relay is controlled by the control unit which stores information of to be updated to be connected and disconnected and switches between transmission and shut-off of the electricity supplied from the battery to the gateway and the control unit. The second relay is controlled by the gateway which executes update of the information stored in the control unit to be connected and disconnected and switches between the transmission and shut-off of the electricity supplied from the battery to the gateway and the control unit. The control unit executes the control of connecting the first relay when the ignition is set to on and of disconnecting the first relay when the ignition is set to off. As a result, when the ignition is set to off, the electricity supplied from the battery is shut off by the ignition and the first relay and is not transmitted to the gateway or the control unit through the ignition or the first relay. On the other hand, when the ignition is set to on, the gateway connects the second relay, while when the ignition is set to off, the gateway performs the information update in the state where the second relay is kept connected. That is, even when the ignition is set to off, the second relay maintains the connected state. Therefore, even when the ignition is set to off, the electricity supplied from the battery is shut off by the ignition but it is transmitted to the gateway and the control unit through the second relay. As a result, even when the ignition is set to off, the gateway can receive the update file transmitted wirelessly from the server and transmit it to the control unit and perform update of the information stored in the control unit. And the gateway executes the control of disconnecting the second relay after the update of the information stored in the control unit is finished. As a result, the electricity supplied from the battery is shut off by the second relay and is not transmitted to the gateway or the control unit through the second relay.

According to this, when the ignition is set to off, even if the gateway and the control unit are not set to the state called the standby mode, the sleep mode or the like, the gateway can perform update of the information stored in the control unit in the state where the second relay is kept connected. Therefore, even if the industrial machine is left in the state where the engine is stopped for a long time such as several weeks or several months, the information update system according to the present invention can update the information stored in the control unit mounted on the industrial machine by using the update file transmitted wirelessly from the server while occurrence of the battery exhaustion is suppressed. Moreover, since the second relay which is controlled by the gateway to be connected and disconnected is provided, the information update system according to the present invention does not need large-scale update or change of the software even when the information stored in the control unit of the industrial machine already in the market is to be updated, but the information stored in the control unit can be updated by retrofit.

In the information update system according to the present invention, the gateway is preferably characterized by acquiring an item number of the information stored in the control unit by communicating with the control unit and by confirming whether the update of the information is needed or not by wirelessly notifying the server of the item number.

According to the information update system according to the present invention, the gateway acquires the item number of the information stored in the control unit and checks whether the update of the information stored in the control unit is needed or not. Therefore, the gateway can receive the update file transmitted wirelessly from the server after confirming that the information stored in the control unit is the information to be updated. In other words, if the information stored in the control unit is not the information to be updated, the gateway can execute control of not receiving the update file transmitted wirelessly from the server. As a result, reception of an unnecessary update file transmitted wireless from the server by the gateway is suppressed, and wasteful consumption of power of the battery or wasteful consumption of a memory capacity of the gateway can be suppressed.

In the information update system according to the present invention, when the information update is not needed, the gateway is preferably characterized by executing control of disconnecting the second relay before the ignition is set to off.

According to the information update system according to the present invention, when the update of the information stored in the control unit is not needed, the gateway disconnects the second relay before the ignition is set to off. As a result, before the ignition is set to off, the electricity supplied from the battery is shut off by the second relay and is not transmitted to the gateway or the control unit through the second relay. As a result, wasteful consumption of power of the battery can be suppressed.

In the information update system according to the present invention, when the information update is needed, the gateway is preferably characterized by receiving the update file, and after the information update has been finished and after confirmation is made that the item number of the information stored in the control unit has been updated, the gateway executes control of disconnecting the second relay.

According to the information update system according to the present invention, when the update of the information stored in the control unit is needed, the gateway receives the update file transmitted wirelessly from the server. And after the update of the information stored in the control unit was finished and after it is confirmed that the item number of the information stored in the control unit was updated, the gateway disconnects the second relay. As a result, the information update system according to the present invention can update the information stored in the control unit mounted on the industrial machine by using the update file transmitted wirelessly from the server more reliably, while occurrence of battery exhaustion is suppressed.

In the information update system according to the present invention, when it cannot be confirmed that the item number of the information stored in the control unit was updated, the gateway is preferably characterized by performing the information update again.

According to the information update system according to the present invention, even when implementation of the update of the item number of the information stored in the control unit cannot be confirmed, the gateway performs the update of the information stored in the control unit again. As a result, the information update system according to the present invention can update the information stored in the control unit mounted on the industrial machine by using the update file transmitted wirelessly from the server more reliably, while occurrence of the battery exhaustion is suppressed.

### [Advantageous Effects of Invention]

According to the present invention, the information update system which can update information stored in the control unit mounted on the industrial machine by using the update file transmitted wirelessly can be provided, while occurrence of the battery exhaustion is suppressed.

### [Brief Description of Drawings]

[Fig. 1]

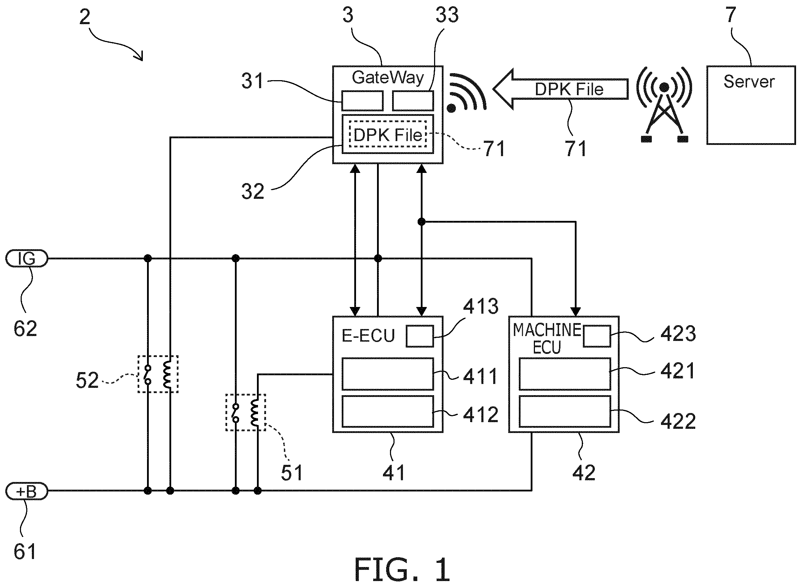

   Fig. 1 is a block diagram illustrating an essential part configuration of an information update system according to an embodiment of the present invention.
[Fig. 2]

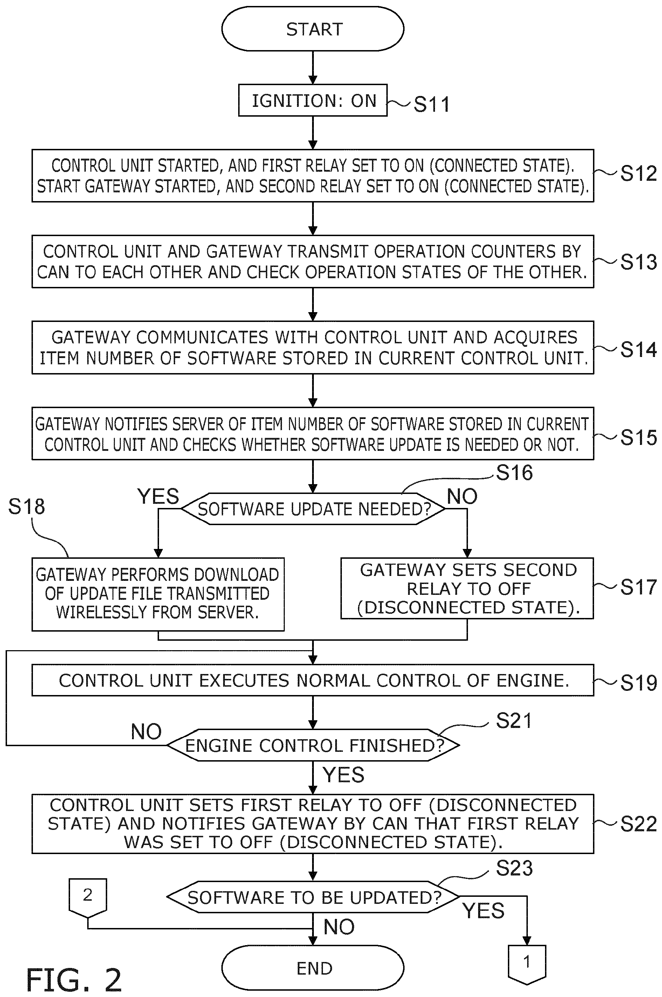

   Fig. 2 is a flowchart exemplifying a specific example in which a gateway of this embodiment performs update of software stored in a control unit.
[Fig. 3]

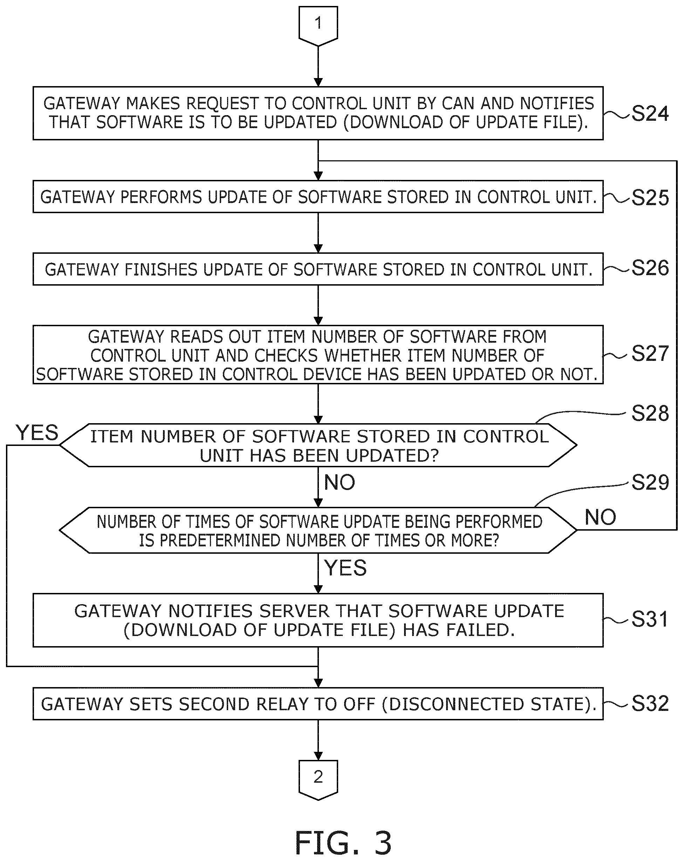

   Fig. 3 is a flowchart exemplifying a specific example in which the gateway of this embodiment performs the update of the software stored in the control unit.

### [Description of Embodiments]

Hereinafter, a preferred embodiment of the present invention will be described in detail by referring to the drawings.

Since the embodiment described below is a preferred specific example of the present invention, technically preferable various limitations are given, but the scope of the present invention is not limited to these modes unless it is particularly described that the present invention is limited in the following description. Moreover, in each of the drawings, the same signs are given to the similar constituent elements, and detailed description will be omitted as appropriate.

Fig. 1 is a block diagram illustrating an essential part configuration of an information update system according to an embodiment of the present invention.

The information update system 2 according to this embodiment includes a gateway 3, an engine ECU (E-ECU: Engine-Electronic Control Unit) 41, a first relay 51, and a second relay 52 and updates information stored in the engine ECU 41. The information update system 2 is mounted on an industrial machine such as a construction machine, an agricultural machine, a lawnmower and the like.

In the information update system 2 according to the present invention, the engine ECU 41 is a control unit which stores information to be updated and has a calculation unit 411, a storage unit 412, and a communication unit 413. The control unit which stores the information to be updated is not limited to the engine ECU 41 shown in Fig. 1 but may be a machine ECU 42 shown in Fig. 1. In the description of this embodiment, a case in which the control unit which stores the information to be updated is the engine ECU 41 will be cited as an example. That is, the engine ECU 41 of this embodiment is an example of the "control unit" of the present invention.

The calculation unit 411 executes various calculations and processing by reading out a program stored in the storage unit 412. The storage unit 412 stores (holds in a storage) various types of software such as a program executed by the calculation unit 411 and data used for calculation and processing of the calculation unit 411. The software stored in the storage unit 412 is updated by the information update system 2 according to this embodiment. That is, the software stored in the storage unit 412 is an example of the "information" of the present invention. As the storage unit 412, a ROM (Read Only Memory), a RAM (Random Access Memory) and the like are cited. The communication unit 413 conducts communication with the gateway 3 and the machine ECU 42 via a CAN communication line and transmits/receives various types of information and various signals.

The gateway 3 has a calculation unit 31, a storage unit 32, and a communication unit 33. The calculation unit 31 executes various calculations and processing by reading out a program stored in the storage unit 32. The storage unit 32 stores (holds in a storage) various types of software such as a program executed by the calculation unit 31 and data used for calculation and processing of the calculation unit 31. As the storage unit 32, a ROM, a RAM and the like are cited. The communication unit 33 conducts communication with the engine ECU 41 and the machine ECU 42 via the CAN communication line and transmits/receives various types of information and various signals.

The gateway 3 receives an update file 71 transmitted wirelessly from a server 7 by the communication unit 33. The update file 71 is a file for performing the update of the software stored in the storage unit 412 of the engine ECU 41. As the update file 71, a compressed file such as a DPK file or the like is cited, for example. The update file 71 is not limited to the DPK file.

The gateway 3 stores the update file 71 received by the communication unit 33 in the storage unit 32. That is, the calculation unit 31 performs download of the update file 71 transmitted wirelessly from the server 7. Then, the calculation unit 31 decompresses the update file 71 stored in the storage unit 32 as necessary, transmits it by the communication unit 33 to the engine ECU 41, and performs the update of the software stored in the storage unit 412 of the engine ECU 41. That is, the gateway 3 of this embodiment performs the update of the software stored in the storage unit 412 of the engine ECU 41 by using an art of OTA (Over The Air). Details of the update of the software stored in the storage unit 412 of the engine ECU 41 will be described later.

The machine ECU 42 has a calculation unit 421, a storage unit 422, and a communication unit 423. The calculation unit 421 executes various calculations and processing by reading out a program stored in the storage unit 422. The storage unit 422 stores (holds in a storage) various types of software such as a program executed by the calculation unit 421 and data used for calculation and processing of the calculation unit 421. As the storage unit 422, a ROM, a RAM and the like are cited. The communication unit 423 conducts communication with the engine ECU 41 and the gateway 3 via the CAN communication line and transmits/receives various types of information and various signals.

The first relay 51 is controlled by the engine ECU 41 to be connected and disconnected. In other words, the engine ECU 41 executes control of setting the first relay 51 to on (connected state) or of setting the first relay 51 to off (disconnected state). Then, the first relay 51 switches between transmission and shut-off of electricity supplied from the battery 61 to the gateway 3, the engine ECU 41 and the machine ECU 42 by being controlled by the engine ECU 41 to be connected and disconnected.

The engine ECU 41 executes control of connecting the first relay 51 when an ignition 62 is set to on. As a result, the electricity supplied from a battery 61 is transmitted to the gateway 3, the engine ECU 41, and the machine ECU 42 through the first relay 51. In this embodiment, the "ignition" is supposed to refer to a component which sets a conduction state to an industrial machine of electricity supplied from the battery 61 mounted on the industrial machine to on or off. Moreover, when the ignition 62 is set to on, the electricity supplied from the battery 61 is transmitted to the gateway 3, the engine ECU 41, and the machine ECU 42 through the ignition 62. As described above, in the information update system 2 according to this embodiment, when the ignition 62 is set to on, the electricity supplied from the battery 61 is transmitted to the gateway 3, the engine ECU 41 and the machine ECU 42 through the first relay 51 and is also transmitted to the gateway 3, the engine ECU 41, and the machine ECU 42 through the ignition 62.

On the other hand, the engine ECU 41 executes control of disconnecting the first relay 51 when the ignition 62 is set to off. As a result, the electricity supplied from the battery 61 is shut off by the first relay 51 and is not transmitted to the gateway 3, the engine ECU 41 or the machine ECU 42 through the first relay 51. Moreover, when the ignition 62 is set to off, the electricity supplied from the battery 61 is shut off by the ignition 62 and is not transmitted to the gateway 3, the engine ECU 41 or the machine ECU 42 through the ignition 62.

The second relay 52 is controlled by the gateway 3 to be connected and disconnected. In other words, the gateway 3 executes control of setting the second relay 52 to on (connected state) or of setting the second relay 52 to off (disconnected state). Then, the second relay 52 switches between transmission and shut-off of the electricity supplied from the battery 61 to the gateway 3, the engine ECU 41 and the machine ECU 42 by being controlled by the gateway 3 to be connected and disconnected.

The gateway 3 executes control of connecting the second relay 52 when the ignition 62 is set to on. As a result, the electricity supplied from the battery 61 is transmitted to the gateway 3, the engine ECU 41, and the machine ECU 42 through the second relay 52. Moreover, when the ignition 62 is set to on, the electricity supplied from the battery 61 is transmitted to the gateway 3, the engine ECU 41, and the machine ECU 42 through the ignition 62. As described above, in the information update system 2 according to this embodiment, when the ignition 62 is set to on, the electricity supplied from the battery 61 is transmitted to the gateway 3, the engine ECU 41 and the machine ECU 42 through the second relay 52 and is also transmitted to the gateway 3, the engine ECU 41, and the machine ECU 42 through the ignition 62.

Here, when the software stored in the control unit mounted on the vehicle is to be updated, in order to reliably complete the update of the software while safety is ensured, such a state is required that the engine of the vehicle is stopped, and the electricity is supplied to the control unit. Therefore, in the system which updates the software stored in the control unit mounted on the vehicle such as an automobile, after the ignition of the vehicle is set to off, an execution control unit which executes update of the software is set to a state called a standby mode or a sleep mode in which an operation is performed with a low power consumption in some cases. And when the control unit which is a target of the software update is brought into a state capable of update, the execution control unit transfers from the state called the standby mode or the sleep mode to a state called an operation mode or a normal mode in which the operation is performed with normal power consumption, and performs the software update in some cases.

However, industrial machines such as a construction machine, an agricultural machine, a lawnmower and the like on which the information update system 2 according to this embodiment is mounted are left in a state where an engine is stopped for a long time such as several weeks or several months as compared with the automobiles in some cases. Therefore, there is a concern that the battery is exhausted even in a case set to a state called the standby mode or the sleep mode in which at least either one of the gateway 3 and the engine ECU 41 is operated with low power consumption. And there is a case in which the engine cannot be started when the user is to use the industrial machine.

On the other hand, in the information update system 2 according to this embodiment, the gateway 3 performs the update of the software stored in the storage unit 412 of the engine ECU 41 in a state where the second relay 52 is kept connected when the ignition 62 is set to off. And the gateway 3 executes control of disconnecting the second relay 52 after the update of the software stored in the storage unit 412 of the engine ECU 41 is finished.

According to the information update system 2 according to this embodiment, even when the ignition 62 is set to off, the second relay 52 maintains the connected state. Therefore, even when the ignition 62 is set to off, the electricity supplied from the battery 61 is shut off by the ignition 62, while it is transmitted to the gateway 3, the engine ECU 41, and the machine ECU 42 through the second relay 52. As a result, even when the ignition 62 is set to off, the gateway 3 receives the update file 71 transmitted wirelessly from the server 7 and transmits it to the engine ECU 41 and can perform the update of the software stored in the storage unit 412 of the engine ECU 41. And the gateway 3 executes the control of disconnecting the second relay 52 after the update of the software stored in the storage unit 412 of the engine ECU 41 is finished. As a result, the electricity supplied from the battery 61 is shut off by the second relay 52 and is not transmitted to the gateway 3, the engine ECU 41 or the machine ECU 42 through the second relay 52.

According to the above, when the ignition 62 is set to off, even if the gateway 3 and the engine ECU 41 are not set to the state called the standby mode or the sleep mode, the gateway 3 can perform the update of the software stored in the storage unit 412 of the engine ECU 41 in the state where the second relay 52 is kept connected. Therefore, even if the industrial machine is left in the state where the engine is stopped for a long time such as several weeks or several months, the information update system 2 according to this embodiment can perform the update of the software stored in the storage unit 412 of the engine ECU 41 mounted on the industrial machine by using the update file 71 transmitted wirelessly from the server **7,** while occurrence of the battery exhaustion is suppressed.

Moreover, since the second relay 52 which is controlled by the gateway 3 to be connected and disconnected is provided, the information update system 2 according to this embodiment does not need large-scale update or change of the software even when the software stored in the storage unit 412 of the engine ECU 41 of the industrial machine already in the market is to be updated, but the update of the software stored in the storage unit 412 of the engine ECU 41 can be performed by retrofit.

Subsequently, a specific example in which the gateway 3 of this embodiment performs the update of the software stored in the storage unit 412 of the engine ECU 41 will be described by referring to the drawings.

Fig. 2 and Fig. 3 are flowcharts exemplifying the specific example in which the gateway of this embodiment performs the update of the software stored in the control unit.

As described above in relation with Fig. 1, in this specific example, a case in which the control unit storing the software to be updated is the engine ECU 41 is cited as an example.

First, at Step S11, the ignition 62 is set to on. As a result, the electricity supplied from the battery 61 is transmitted to the gateway 3, the engine ECU 41, and the machine ECU 42 through the ignition 62.

Subsequently, at Step S12, the engine ECU 41 is started and executes control of connecting the first relay 51. That is, at Step S12, the engine ECU 41 sets the first relay 51 to on (connected state). As a result, the electricity supplied from the battery 61 is transmitted to the gateway 3, the engine ECU 41, and the machine ECU 42 through the first relay 51. Moreover, at Step S12, the gateway 3 is started and executes control of connecting the second relay 52. That is, at Step S12, the gateway 3 sets the second relay 52 to on (connected state). As a result, the electricity supplied from the battery 61 is transmitted to the gateway 3, the engine ECU 41, and the machine ECU 42 through the second relay 52.

Subsequently, at Step S13, the engine ECU 41 and the gateway 3 transmit operation counters by the CAN to each other and check an operation state of the other. That is, the engine ECU 41 and the gateway 3 mutually check the started state.

Subsequently, at Step S14, the gateway 3 communicates with the engine ECU 41 by the CAN and acquires an item number of the software stored in the storage unit 412 of the current engine ECU 41. Subsequently, at Step S15, the gateway 3 wirelessly notifies the server 7 of the item number of the software stored in the storage unit 412 of the current engine ECU 41 and checks whether the update of the software is needed or not.

Subsequently, at Step S16, the gateway 3 determines whether the update of the software stored in the storage unit 412 of the current engine ECU 41 is needed or not. If the update of the software is not needed (Step S16: NO), at Step S17, the gateway 3 executes the control of disconnecting the second relay 52. That is, at Step S17, the gateway 3 sets the second relay 52 to off (disconnected state). As a result, the electricity supplied from the battery 61 is shut off by the second relay 52 and is not transmitted to the gateway 3, the engine ECU 41 or the machine ECU 42 through the second relay 52.

On the other hand, if the update of the software is needed (Step S16: YES), at Step S18, the gateway 3 makes a request to the server 7 for download of the update file 71 and receives the update file 71 transmitted wirelessly from the server 7 by the communication unit 33. Then, the gateway 3 stores the update file 71 received by the communication unit 33 in the storage unit 32. That is, at Step S18, the gateway 3 executes the download of the update file 71 transmitted wirelessly from the server 7.

At Step S19 subsequent to Step S17 and Step S18, the engine ECU 41 executes normal control of the engine. Subsequently, at Step S21, at least either one of the gateway 3 and the engine ECU 41 determines whether the control of the engine has been finished or not. In other words, at Step S21, at least either one of the gateway 3 and the engine ECU 41 determines whether the ignition 62 has been set to off or not. For example, at least either one of the gateway 3 and the engine ECU 41 confirms that the control of the engine has been finished by detecting that the ignition 62 is set to off.

If the control of the engine has not been finished (Step S21: NO), at Step S19, the engine ECU 41 continuously executes the normal control of the engine. On the other hand, if the control of the engine has been finished (Step S21: YES), at Step S22, after the engine ECU 41 executes processing of writing down required information in the storage unit 412, it sets the first relay 51 to off. Then, the engine ECU 41 notifies the gateway 3 that the first relay 51 was set to off by the CAN. That is, at Step S21, after the engine ECU 41 executes the processing of writing down the required information in the storage unit 412, it sets the first relay 51 to off and notifies the gateway 3 that the update of the software has been enabled by the CAN.

Subsequently, at Step S23, the gateway 3 determines whether the software stored in the storage unit 412 of the current engine ECU 41 is to be updated or not. In other words, at Step S23, the gateway 3 determines whether the update file 71 transmitted wirelessly from the server 7 has been received or not. If the software is not to be updated (Step S23: NO), the operation of the information update system 2 ends.

On the other hand, when the software is to be updated (Step S23: YES), at Step S24, the gateway 3 makes a request to the engine ECU 41 by the CAN and notifies that the software is to be updated (that is, download of the update file 71). Subsequently, at Step S25, the gateway 3 transmits the update file 71 stored in the storage unit 32 to the engine ECU 41 by the CAN and performs the update of the software stored in the storage unit 412 of the engine ECU 41. Subsequently, at Step S26, the gateway 3 finishes the update of the software stored in the storage unit 412 of the engine ECU 41.

Subsequently, at Step S27, the gateway 3 reads out the item number of the software stored in the storage unit 412 of the engine ECU 41 from the engine ECU 41 and checks whether the item number of the software stored in the storage unit 412 of the engine ECU 41 has been updated or not. Then, at Step S28, the gateway 3 determines whether the item number of the software stored in the storage unit 412 of the engine ECU 41 has been updated or not.

If the item number of the software stored in the storage unit 412 of the engine ECU 41 has been updated (Step S28: YES), at Step S32, the gateway 3 sets the second relay 52 to off. As a result, the electricity supplied from the battery 61 is shut off by the second relay 52 and is not transmitted to the gateway 3, the engine ECU 41 or the machine ECU 42 through the second relay 52.

On the other hand, if the item number of the software stored in the storage unit 412 of the engine ECU 41 has not been updated (Step S28: NO), at Step S29, the gateway 3 determines whether the number of times of the update of the software stored in the storage unit 412 of the engine ECU 41 being performed is a predetermined number of more. If the number of times of the software update being performed is not more than the predetermined number of times (Step S29: NO), at Step S25, the gateway 3 performs the update of the software stored in the storage unit 412 of the engine ECU 41 again.

On the other hand, if the number of times of the software update being performed is the predetermined number or more (Step S29: YES), at Step S31, the gateway 3 notifies the server 7 that the update of the software stored in the storage unit 412 of the engine ECU 41, that is, the download of the update file 71 to the engine ECU 41 has failed. Subsequently, at Step S32, the gateway 3 sets the second relay 52 to off. Then, the operation of the information update system 2 is finished.

According to this specific example, even when the ignition 62 is set to off, the second relay 52 maintains the connected state until the item number of the software stored in the storage unit 412 of the engine ECU 41 is updated (Step S28: YES) or until the gateway 3 notifies the server 7 that the update of the software stored in the storage unit 412 of the engine ECU 41 has failed (Step S31). Therefore, even when the ignition 62 is set to off, the electricity supplied from the battery 61 is shut off by the ignition 62, while it is transmitted to the gateway 3, the engine ECU 41, and the machine ECU 42 through the second relay 52. As a result, even when the ignition 62 is set to off, the gateway 3 transmits the update file 71 to the engine ECU 41 and can perform the update of the software stored in the storage unit 412 of the engine ECU 41.

According to the above, when the ignition 62 is set to off, even if the gateway 3 and the engine ECU 41 are not set to the state called the standby mode or the sleep mode, the gateway 3 can perform the update of the software stored in the storage unit 412 of the engine ECU 41 in the state where the second relay 52 is kept connected. Therefore, even if an industrial machine is left in the state where the engine is stopped for a long time such as several weeks or several months, the information update system 2 according to this embodiment can perform the update of the software stored in the storage unit 412 of the engine ECU 41 mounted on the industrial machine by using the update file 71 transmitted wirelessly from the server 7, while occurrence of the battery exhaustion is suppressed.

Moreover, since the second relay 52 which is controlled by the gateway 3 to be connected and disconnected is provided, the information update system 2 according to this embodiment does not need large-scale update or change of the software even when the software stored in the storage unit 412 of the engine ECU 41 of the industrial machine already in the market is to be updated, but the update of the software stored in the storage unit 412 of the engine ECU 41 can be performed by retrofit.

Moreover, the gateway 3 acquires the item number of the software stored in the storage unit 412 of the engine ECU 41 (Step S14) and checks whether the software update is needed or not (Step S15). Therefore, the gateway 3 can receive the update file transmitted wirelessly from the server (Step S18) after it is confirmed that the software stored in the storage unit 412 of the engine ECU 41 is the software to be updated (Step S16: YES). In other words, if the software stored in the storage unit 412 of the engine ECU 41 is not the software to be updated (Step S16: NO), the gateway 3 does not receive the update file 71 transmitted wirelessly from the server 7 but executes the control of disconnecting the second relay 52 (Step S17). As a result, reception of the unnecessary update file 71 by the gateway 3 is suppressed, and wasteful consumption of power of the battery 61 or wasteful consumption of the memory capacity of the storage unit 32 of the gateway 3 can be suppressed.

Moreover, as described above, if the software stored in the storage unit 412 of the engine ECU 41 is not the software to be updated (Step S16: NO), the gateway 3 does not receive the update file 71 transmitted wirelessly from the server 7 but executes the control of disconnecting the second relay 52 before the ignition 62 is set to off (that is, before the control of the engine is finished) (Step S17). As a result, before the ignition 62 is set to off, the electricity supplied from the battery 61 is shut off by the second relay 52 and is not transmitted to the gateway 3, the engine ECU 41 or the machine ECU 42 through the second relay 52. As a result, wasteful consumption of the power of the battery 61 can be suppressed.

Moreover, if the update of the software stored in the storage unit 412 of the engine ECU 41 is needed (Step S16: YES), the gateway 3 receives the update file 71 transmitted wirelessly from the server 7 (Step S18). Then, after the update of the software stored in the storage unit 412 of the engine ECU 41 was finished (Step S26), and after it is confirmed that the item number of the software was updated (Step S28: YES), the gateway 3 sets the second relay 52 to off (Step S32). As a result, the information update system 2 according to this embodiment can update the software stored in the storage unit 412 of the engine ECU 41 mounted on the industrial machine more reliably by using the update file 71 transmitted wirelessly from the server 7, while occurrence of the battery exhaustion is suppressed.

Moreover, if it cannot be confirmed that the item number of the software stored in the storage unit 412 of the engine ECU 41 has been updated (Step S28: NO), the gateway 3 performs the update of the software stored in the storage unit 412 of the engine ECU 41 again (Step S25). As a result, the information update system 2 according to this embodiment can update the software stored in the storage unit 412 of the engine ECU 41 mounted on the industrial machine more reliably by using the update file 71 transmitted wirelessly from the server 7, while occurrence of the battery exhaustion is suppressed.

The embodiment of the present invention has been described. However, the present invention is not limited to the embodiment described above but is capable of various changes within a range not departing from the scope of claims. The configuration of the aforementioned embodiment can be partially omitted or can be arbitrarily combined differently from the above.

In the aforementioned embodiment, the case in which the control unit which stores the information to be updated is the engine ECU 41 was cited as an example. However, the control unit which stores the information to be updated is not limited only to the engine ECU 41. The control unit which stores the information to be updated may be the machine ECU 42 or both the engine ECU 41 and the machine ECU 42.

### [Reference Signs List]

- 2: Information update system
- 3: Gateway
- 7: Server
- 31: Calculation unit
- 32: Storage unit
- 33: Communication unit
- 41: Engine ECU
- 42: Machine ECU
- 51: First relay
- 52: Second relay
- 61: Battery
- 62: Ignition
- 71: Update file
- 411: Calculation unit
- 412: Storage unit
- 413: Communication unit
- 421: Calculation unit
- 422: Storage unit
- 423: Communication unit

## Claims

1. An information update system (2) updating information stored in a control unit (41; 42) mounted on an industrial machine, the information update system (2) comprising:
an ignition (52) which sets a conduction state of electricity, supplied from a battery (61) mounted on the industrial machine to the industrial machine, to on or off;
a control unit (41; 42) which stores the information to be updated;
**characterized in that** the information update system (2) further comprises:
a gateway (3) which performs the information update by receiving an update file (71) transmitted wirelessly from a server (7) and by transmitting the received update file (71) to the control unit (41; 42);
a first relay (51) which is controlled by the control unit (41; 42) to be connected and disconnected and switches between transmission and shut-off of the electricity supplied from the battery (61) to the gateway (3) and the control unit; and
a second relay (52) which is controlled by the gateway (3) to be connected and disconnected and switches between the transmission and the shut-off of the electricity supplied from the battery (61) to the gateway (3) and the control unit (41; 42), wherein
the electricity supplied from the battery (61) is transmitted to the gateway (3) and the control unit (41; 42) through the ignition (62) when the ignition (62) is set to on, and is shut off by the ignition (62) and is not transmitted to the gateway (3) and the control unit (41; 42) when the ignition (62) is set to off;
the control unit (41; 42) executes control of connecting the first relay (51) when the ignition (62) is set to on and of disconnecting the first relay (51) when the ignition (62) is set to off; and
the gateway (3) executes control of connecting the second relay (52) when the ignition (62) is set to on, control of performing the information update in a state where the second relay (52) is kept connected when the ignition (62) is set to off, and control of disconnecting the second relay (52) after the information update is finished.

2. The information update system (2) according to claim 1, wherein
the gateway (3) acquires an item number of the information stored in the control unit (41; 42) by communicating with the control unit (41; 42) and checks whether update of the information is needed or not by wirelessly notifying the server (7) of the item number.

3. The information update system (2) according to claim 2, wherein
when the update of the information is not needed, the gateway (3) executes control of disconnecting the second relay (52) before the ignition (62) is set to off.

4. The information update system (2) according to claim 2, wherein
when the update of the information is needed, the gateway (3) receives the update file (71), and after the update of the information has been finished and after confirmation is made that the item number of the information stored in the control unit (41; 42) has been updated, the gateway (3) executes control of disconnecting the second relay (52).

5. The information update system (2) according to claim 4, wherein
when implementation of update of the item number of the information stored in the control unit (41; 42) cannot be confirmed, the gateway (3) performs the update of the information again.

## Patentansprüche

1. Informationsaktualisierungssystem (2) zum Aktualisieren von Informationen, die in einer Steuereinheit (41, 42) gespeichert sind, welche an einer Industriemaschine montiert ist, wobei das Informationsaktualisierungssystem (2) Folgendes umfasst:
eine Zündung (52), die einen Leitungszustand für Elektrizität, welche von einer an der Industriemaschine montierten Batterie (61) der Industriemaschine zugeführt wird, auf EIN oder AUS setzt;
eine Steuereinheit (41, 42), welche die zu aktualisierenden Informationen speichert;
**dadurch gekennzeichnet, dass** das Informationsaktualisierungssystem (2) ferner Folgendes umfasst:
ein Gateway (3), das die Informationsaktualisierung durch Empfangen einer Aktualisierungsdatei (71), welche von einem Server (7) drahtlos übertragen wird, und durch Senden der empfangenen Aktualisierungsdatei (71) an die Steuereinheit (41, 42) durchführt;
ein erstes Relais (51), das durch die Steuereinheit (41, 42) gesteuert wird, um verbunden und getrennt zu werden, und zwischen dem Übertragen und dem Ausschalten der von der Batterie (61) zugeführten Elektrizität für das Gateway (3) und die Steuereinheit umschaltet; und
ein zweites Relais (52), das durch das Gateway (3) gesteuert wird, um verbunden und getrennt zu werden, und zwischen dem Übertragen und dem Ausschalten der von der Batterie (61) zugeführten Elektrizität für das Gateway (3) und die Steuereinheit (41, 42) umschaltet, wobei
die von der Batterie (61) zugeführte Elektrizität über die Zündung (62) an das Gateway (3) und die Steuereinheit (41, 42) übertragen wird, wenn die Zündung (62) auf EIN gesetzt ist, und von der Zündung (62) ausgeschaltet und nicht an das Gateway (3) und die Steuereinheit (41, 42) übertragen wird, wenn die Zündung (62) auf AUS gesetzt ist;
die Steuereinheit (41, 42) das Steuern des Verbindens des ersten Relais (51) ausführt, wenn die Zündung (62) auf EIN gesetzt ist, und des Trennens des ersten Relais (51) durchführt, wenn die Zündung (62) auf AUS gesetzt ist; und
das Gateway (3) das Steuern des Verbindens des zweiten Relais (52) durchführt, wenn die Zündung (62) auf EIN gesetzt ist, das Steuern des Durchführens der Informationsaktualisierung in einem Zustand, in dem das zweite Relais (52) verbunden bleibt, durchführt, wenn die Zündung (62) auf AUS gesetzt ist, und das Steuern des Trennens des zweiten Relais (52) durchführt, nachdem die Informationsaktualisierung beendet ist.

2. Informationsaktualisierungssystem (2) nach Anspruch 1, wobei
das Gateway (3) eine Item-Nummer der in der Steuereinheit (41, 42) gespeicherten Informationen durch Kommunizieren mit der Steuereinheit (41, 42) erfasst und überprüft, ob ein Aktualisieren der Informationen erforderlich ist, indem sie dem Server (7) drahtlos die Item-Nummer mitteilt.

3. Informationsaktualisierungssystem (2) nach Anspruch 2, wobei
wenn das Aktualisieren der Informationen nicht erforderlich ist, das Gateway (3) ein Steuern des Trennens des zweiten Relais (52) durchführt, bevor die Zündung (62) auf AUS gesetzt wird.

4. Informationsaktualisierungssystem (2) nach Anspruch 2, wobei
wenn das Aktualisieren der Informationen erforderlich ist, das Gateway (3) die Aktualisierungsdatei (71) empfängt, und das Gateway (3) nach dem Beenden des Aktualisierens der Informationen und nach dem Erfolgen einer Bestätigung, dass die Item-Nummer der in der Speichereinheit (41, 42) gespeicherten Informationen aktualisiert wurde, ein Steuern des Trennens des zweiten Relais (52) durchführt.

5. Informationsaktualisierungssystem (2) nach Anspruch 4, wobei
wenn das Implementieren der Aktualisierung der Item-Nummer der in der Speichereinheit (41, 42) gespeicherten Informationen nicht bestätigt werden kann, das Gateway (3) die Aktualisierung der Informationen erneut durchführt.

## Revendications

1. Système de mise à jour d'informations (2) mettant à jour des informations stockées dans une unité de commande (41 ; 42) montée sur une machine industrielle, le système de mise à jour d'informations (2) comprenant :
un allumage (52) qui définit un état de conduction d'électricité, alimenté à partir d'une batterie (61) montée sur la machine industrielle vers la machine industrielle, en marche ou en arrêt ;
une unité de commande (41 ; 42) qui stocke les informations à mettre à jour ;
**caractérisé en ce que** le système de mise à jour d'informations (2) comprend en outre :
une passerelle (3) qui effectue la mise à jour d'informations en recevant un fichier de mise à jour (71) transmis sans fil depuis un serveur (7) et en transmettant le fichier de mise à jour reçu (71) à l'unité de commande (41 ; 42) ;
un premier relais (51) qui est commandé par l'unité de commande (41 ; 42) pour être connecté et déconnecté et commute entre la transmission et la coupure de l'électricité fournie par la batterie (61) à la passerelle (3) et à l'unité de commande ; et
un second relais (52) qui est commandé par la passerelle (3) pour être connecté et déconnecté et commute entre la transmission et la coupure de l'électricité fournie par la batterie (61) à la passerelle (3) et à l'unité de commande (41 ; 42), dans lequel
l'électricité fournie par la batterie (61) est transmise à la passerelle (3) et à l'unité de commande (41 ; 42) par l'intermédiaire de l'allumage (62) lorsque l'allumage (62) est mis en marche, et est coupée par l'allumage (62) et n'est pas transmise à la passerelle (3) et à l'unité de commande (41 ; 42) lorsque l'allumage (62) est mis en arrêt ;
l'unité de commande (41 ; 42) exécute une commande de connexion du premier relais (51) lorsque le contact (62) est réglé sur Marche et de déconnexion du premier relais (51) lorsque le contact (62) est réglé sur Arrêt ; et
la passerelle (3) exécute une commande de connexion du second relais (52) lorsque l'allumage (62) est réglé sur Marche, commande une exécution de la mise à jour d'informations dans un état dans lequel le second relais (52) est maintenu connecté lorsque l'allumage (62) est réglé sur Arrêt, et commande une déconnexion du second relais (52) une fois la mise à jour des informations terminée.

2. Appareil de traitement d'informations (2) selon la revendication 1, dans lequel
la passerelle (3) acquiert un numéro d'article des informations stockées dans l'unité de commande (41 ; 42) en communiquant avec l'unité de commande (41 ; 42) et vérifie si une mise à jour des informations est nécessaire ou non en notifiant sans fil au serveur (7) le numéro d'article.

3. Appareil de traitement d'informations (2) selon la revendication 2, dans lequel
lorsque la mise à jour des informations n'est pas nécessaire, la passerelle (3) exécute une commande de déconnexion du second relais (52) avant que l'allumage (62) ne soit mis à l'arrêt.

4. Appareil de traitement d'informations (2) selon la revendication 2, dans lequel
lorsque la mise à jour des informations est nécessaire, la passerelle (3) reçoit le fichier de mise à jour (71), et après que la mise à jour des informations a été terminée et après confirmation que le numéro d'article des informations stockées dans l'unité de commande (41 ; 42) a été mis à jour, la passerelle (3) exécute une commande de déconnexion du second relais (52).

5. Appareil de traitement d'informations (2) selon la revendication 4, dans lequel
lorsque la mise en œuvre de la mise à jour du numéro d'article des informations stockées dans l'unité de commande (41 ; 42) ne peut pas être confirmée, la passerelle (3) effectue à nouveau la mise à jour des informations.
